# EUROPEAN PATENT SPECIFICATION

(11) **EP 3 671 175 B1**
(45) Date of publication and mention of the grant of the patent: **17.08.2022**
(21) Application number: 19760788.0
(22) Date of filing: 31.01.2019
(51) Int. Cl.: G01M 7/00, G01M 13/00, G05B 23/02

(54) **CONDITION DIAGNOSING DEVICE, CONDITION DIAGNOSING METHOD, AND CONDITION DIAGNOSING PROGRAM**
ZUSTANDSDIAGNOSEVORRICHTUNG, ZUSTANDSDIAGNOSEVERFAHREN UND ZUSTANDSDIAGNOSEPROGRAMM
DISPOSITIF DE DIAGNOSTIC D'ÉTAT, PROCÉDÉ DE DIAGNOSTIC D'ÉTAT ET PROGRAMME DE DIAGNOSTIC D'ÉTAT

(30) Priority: 27.02.2018 JP 2018032775
(43) Date of publication of application: 24.06.2020
(73) Proprietor: Mitsubishi Heavy Industries Marine Machinery & Equipment Co., Ltd., Nagasaki-shi Nagasaki 8508610 (JP)
(72) Inventor: SAITO, Eiji, Nagasaki-shi, Nagasaki 850-8610 (JP)
(74) Representative: Hoffmann Eitle
(86) International application number: PCT/JP2019/003409
(87) International publication number: WO 2019/167537

(56) References cited:
- EP-A2- 2 884 404
- WO-A1-2011/023596
- CN-A- 106 969 266
- CN-B- 102 662 321
- JP-A- H 102 843
- JP-A- H 102 843
- JP-A- 2010 175 446
- JP-A- 2010 175 446
- JP-A- 2010 203 929
- JP-A- 2010 203 929
- JP-A- 2016 110 594
- JP-A- 2017 157 072
- US-A- 5 519 298

## Description

### Technical Field

The present invention relates to a condition diagnosing device, a condition diagnosing method, and a condition diagnosing program.

### Background Art

As a method of determining an abnormal condition of an apparatus, generally, there is a method in which a threshold value for determining the occurrence of abnormality during use of the apparatus is set, and a notification of abnormality is sent in a case where the threshold value is exceeded, a method of diagnosing the propriety of a condition of the apparatus, or the like. For example, PTL 1 discloses a technique in which, in monitoring an operation of a marine main engine steam turbine, the propriety of an operation condition is diagnosed on the basis of the extent of deviation of turbine output operation data from a design value of operation data, that is, design data that is operation initial condition data at the time of test operation or the like.

### Citation List

### Patent Literature

[PTL 1] Japanese Patent No. 4669061

CN 106 969 266 A discloses a pressure monitoring device comprising:
a measured data collecting unit that sequentially collects and accumulates pieces of measured data; a calculation unit that calculates an allowable range of each monitoring item on the basis of a standard value of each monitoring item calculated by using the measured data accumulated in the measured data collecting unit and a standard deviation of the standard value, and updates the standard value and the allowable range at any time by using the measured data accumulated in a first past predetermined period from the current time among the pieces of measured data accumulated at any time in the measured data collecting unit.

US 5 519 298 A discloses calculating a value (µ+xσ) on the basis of a long period average value µ which is regarded as an abnormality reference value. A short term period average value a is compared with the abnormality reference value, so as to detect abnormality (see paragraph [0008]). The object is to detect an abnormality, even when for example, the table is unworn and the average level of vibration is changing at a low absolute value. Thus, the abnormality reference value in this document is set to be lower than an original reference value, that is, set to be closer to the comparison target.

In WO 2011/023596 A1 a standard deviation is calculated from a first data set and an allowable range is defined based on the first data set. These values are updated.

### Summary of Invention

### Technical Problem

However, in the method of the related art in which a notification of abnormality is sent in a case where the threshold value is exceeded, it is only monitored that an output value is equal to or less than a threshold value that is uniquely set in advance regardless of characteristics of a target apparatus, and thus there are cases where a condition change of the apparatus may not be detected, and a sign of apparatus malfunction may be missed. If an operation is continued in a condition in which the sign of malfunction is missed, the apparatus finally stops, and thus the apparatus may be damaged. In the invention disclosed in PTL 1, since the operation initial condition data is used as reference data, comparison with the initial condition data is performed at all times, and thus a secular change cannot be recognized, and it is difficult to predict secular deterioration. Thus, there is a problem in that it is difficult to judge that a change in an operation condition occurs due to what kind of external factors such as secular deterioration or a temporary factor (for example, an operation error) in the operation condition.

The present invention has been made in light of the circumstances, and an object thereof is to provide a condition diagnosing device, a condition diagnosing method, and a condition diagnosing program capable of monitoring a condition of a diagnosis target, foreseeing malfunction, and predicting secular deterioration.

### Solution to Problem

The present invention is defined in the appended independent claims. Embodiments of the invention are given in the dependent claims.

According to one aspect, the condition diagnosing device includes the measured data collecting unit that sequentially collects and accumulates pieces of measured data for a plurality of monitoring items related to a diagnosis target apparatus; the calculation unit that calculates an allowable range of each monitoring item on the basis of a standard value of each monitoring item calculated by using the measured data accumulated in the measured data collecting unit and a standard deviation of the standard value, and updates the standard value and the allowable range at any time by using measured data accumulated in a first past predetermined period from the current time among pieces of measured data accumulated at any time in the measured data collecting unit; and the evaluation unit that evaluates a condition of the apparatus by using the allowable range calculated by the calculation unit, a second past predetermined period is a period longer than the first past predetermined period, and the calculation unit sets a predetermined weight by using measured data accumulated in the second past predetermined period from the current time with respect to the standard deviation of the standard value for each monitoring item, and calculates the allowable range of each monitoring item. Therefore, since a condition change for the diagnosis target apparatus can be recognized, and an abnormal condition of the apparatus can be monitored in the short, medium, or long term. Consequently, the occurrence of abnormality can be detected in the short term, and a qualitative secular change can be recognized in the medium or long term and can thus be used as a guide to medium or long-term maintenance and secular change prediction. In the related art, there is a case where maintenance is required to be performed in regular inspection despite a normal condition, but, inspection is omitted for an apparatus in which measured data is determined as being within an allowable range, abnormality does not occur, and maintenance is not required, and thus it is possible to minimize cost for the maintenance. A predetermined weight is set for a standard deviation of a standard value for each monitoring item by using measured data accumulated in the second past predetermined period from the current time, and thus an allowable range of each monitoring item is calculated. It is possible to handle measured data in which a discontinuous point is present by using the standard deviation. In addition, since weighting is performed on the basis of measured data in the second past predetermined period longer than the first past predetermined period, that is, measured data accumulated in a longer period, depending on different conditions in each monitoring item, the tendency of the measured data can be provided to an allowable range, and instantaneously occurring oscillation of measured data can also be excluded from the allowable range. It is possible to perform condition diagnosis conforming with an actual situation by finely setting an allowable range of each monitoring item.

In the first aspect, the calculation unit may change and set a weighting coefficient depending on a magnitude of the influence of disturbance, the weighting coefficient being calculated by using the measured data accumulated in the second past predetermined period from the current time with respect to the standard deviation of the standard value for each monitoring item.

According to the aspect, the calculation unit changes and sets a weighting coefficient depending on the magnitude of the influence of disturbance, the weighting coefficient being calculated by using measured data accumulated in the second past predetermined period from the current time with respect to a standard deviation of a standard value for each monitoring item. Therefore, since a condition change for the diagnosis target apparatus can be recognized, and an abnormal condition of the apparatus can be monitored in the short, medium, or long term. Consequently, the occurrence of abnormality can be detected in the short term, and a qualitative secular change can be recognized in the medium or long term and can thus be used as a guide to medium or long-term maintenance and secular change prediction. Since a weighting coefficient is changed and set depending on the magnitude of the influence of disturbance, among monitoring items, the weighting coefficient is set to be greater for a monitoring item easily influenced by disturbance than for a monitoring item hardly influenced by disturbance, and thus it is possible to perform condition diagnosis conforming with an actual situation. A weighting coefficient is set to be relatively small for a monitoring item hardly influenced by disturbance, and thus it is possible to set a narrow allowable range. In a case where weighting is omitted, an unnecessary calculation process can be omitted. It is possible to handle measured data in which a discontinuous point is present by using the standard deviation of the standard value.

In the first aspect, the evaluation unit may compare the current measured data of the monitoring item with the allowable range of the monitoring item, and determine that there is a sign of abnormality in a case where the measured data is not within the allowable range.

According to the aspect, since the evaluation unit compares the current measured data of the monitoring item with the allowable range of the monitoring item, determines that there is a sign of abnormality in a case where the measured data is not within the allowable range, and monitors a condition change of a diagnosis target apparatus by using the allowable range that dynamically changes in a time series. Thus, the evaluation unit can recognize interim process changing from a normal condition to an abnormal condition. Consequently, it is possible to detect a sign of abnormality, and thus to prevent in advance a defect by taking appropriate and accurate measures in a stage before abnormality occurs. An allowable range is set by using data actually acquired from a diagnosis target apparatus, and thus an appropriate range can be set in each apparatus.

In the first aspect, the condition diagnosing device may further include a notification unit that performs a notification in a case where the current measured data of the monitoring item is not within the allowable range.

According to the aspect, the condition diagnosing device includes a notification unit that performs a notification in a case where the current measured data of the monitoring item is not within the allowable range, and thus a notification of a sign of abnormality can be clearly performed.

Consequently, maintenance for an apparatus of which the notification of abnormality is performed can be quickly prompted, and thus it is possible to take necessary measures before a failure or damage occurs.

### Advantageous Effects of Invention

According to the present invention, since conditions of apparatuses are monitored on the basis of allowable ranges that are sequentially updated in correspondence with *(continued on p. 12)* the respective apparatuses, it is possible to prevent the occurrence of abnormality in advance and also to recognize a secular change.

### Brief Description of Drawings

Fig. 1 is a block diagram illustrating a schematic configuration of a condition diagnosing device of the present invention.
Fig. 2 is a flowchart illustrating an operation content of the condition diagnosing device of the present invention.
Figs. 3A and 3B are diagrams illustrating examples of a matrix for a turbine vibration value in a case where a monitoring item is a main shaft rotation speed.
Figs. 4A and 4B are diagram illustrating examples of a standard value and an allowable range of the turbine vibration value in a case where a monitoring item is a main shaft rotation speed.
Fig. 5 is a graph illustrating a monitoring example for a standard value based on a secular change. Description of Embodiments

Hereinafter, a condition diagnosing device, a condition diagnosing method, a condition diagnosing program according to an embodiment of the present invention will be described with reference to the drawings. Hereinafter, in the following embodiment, a description will be made of a case where the condition diagnosing device of the present invention is applied to condition diagnosis for a marine main engine turbine.

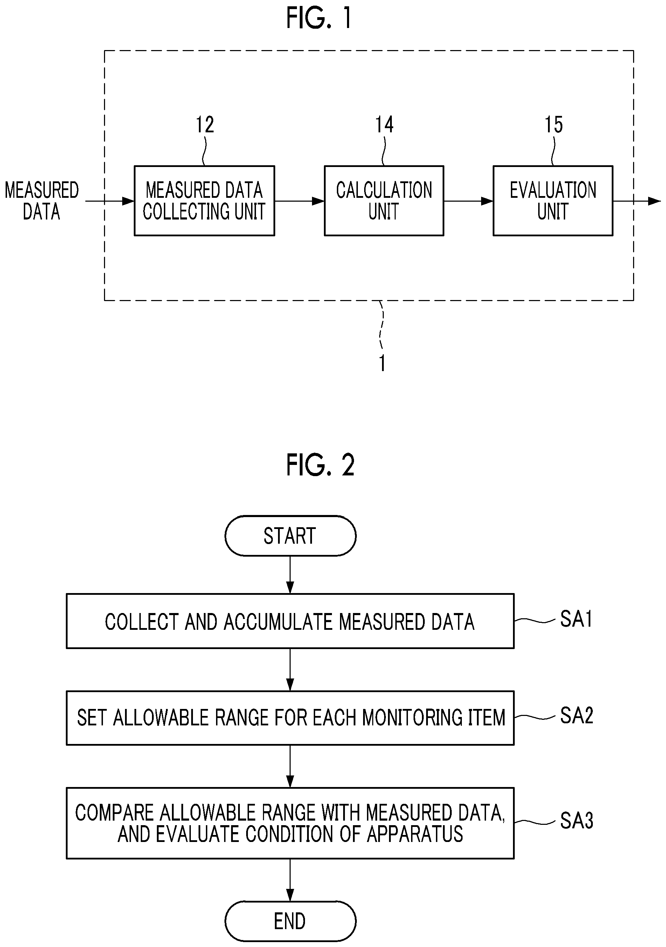

Fig. 1 is a block diagram illustrating a schematic configuration of a condition diagnosing device according to the present embodiment. As illustrated in Fig. 1, a condition diagnosing device 1 includes a measured data collecting unit 12, a calculation unit 14, and an evaluation unit 15 as main constituent elements.

Measured data is transmitted in real time to the measured data collecting unit 12 from sensors attached to respective portions of the marine main engine turbine. Consequently, pieces of measured data for respective monitoring items, that is, pieces of measured data such as a main shaft rotation speed, main engine output, a turbine bearing temperature, a turbine vibration value, a turbine shaft position, a turbine internal steam temperature, and a turbine internal steam pressure are sequentially accumulated in the measured data collecting unit 12.

The calculation unit 14 sets an allowable range of each monitoring item by using the measured data regarding each monitoring item. Specifically, the calculation unit 14 sets an allowable range by using a standard value, a standard deviation, and a weighting coefficient of the measured data regarding each monitoring item. Here, the standard value is a value used as a reference of measured data in a predetermined period, and is an average value of measured data in a predetermined period in the present embodiment. In a case where measured data is linear, a range from a value obtained by subtracting a predetermined value from the standard value to a value obtained by adding the standard value to a predetermined value may be used as the allowable range. However, particularly, in a case of the marine main engine turbine, a discontinuous point occurs due to switching between navigation in a port and navigation in an ocean, and thus measured data is not linear. Therefore, in a case where a standard deviation of the standard value is used, an appropriate allowable range can be set even though measured data is a discontinuous value. The weighting is to give a corresponding coefficient to each monitoring item, and is to weight a factor such as disturbance not appearing in only a standard deviation. For example, the calculation unit 14 has a weighting coefficient α corresponding to each monitoring item, and sets a value obtained by subtracting a multiplication of the weighting coefficient α and a standard deviation σ from an average value µ as a lower limit value of the allowable range, and sets a value obtained by adding the multiplication of the coefficient α and standard deviation σ to the average value µ as an upper limit value of the allowable range.

The allowable range is expressed by the following expressions.

### Lower limit value: µ-α*σ

### Upper limit value: µ+α*σ

The calculation unit 14 updates the standard value and the standard deviation by using measured data in a first past predetermined period from the current time, collected by the measured data collecting unit 12. The weighting coefficient is updated by using measured data in a second past predetermined period from the current time. The allowable range is updated at a predetermined time interval by using the values. Consequently, the allowable range is updated at any times in the form of normally incorporating new measured data.

Here, the first past predetermined period is assumed to be, for example, a period of one voyage (a period required to sail along a certain course). Consequently, sampling can be performed to cover numerical values from anchor to anchor via port navigation, ocean navigation, and port navigation, and from a low load of the turbine to a high load thereof, that is, from a low rotation speed to a high rotation speed with respect to a rotation speed, and thus an allowable range can be appropriately updated.

The second past predetermined period is a period longer than the first past predetermined period, and is set to, for example, at least a year, and, for example, about a year. The influence which seasonal disturbance (a temperature, a seawater temperature, marine weather, or the like) has on an apparatus changes due to a yearly change of the disturbance. Therefore, the second past predetermined period is set to at least a year, and thus a weighting coefficient is updated by using measured data including the influence of seasonal disturbance. As mentioned above, it is possible to appropriately update an allowable range by using measured data including the influence of a seasonal change. However, in a case where the second past predetermined period is set to a long period such as two years, an allowable range includes a secular change, and thus about a year is preferably set. A weighting coefficient is updated on the basis of measured data in the second past predetermined period set in the above-described way, and thus an allowable range is updated. An allowable range is set such that the current measured data (originally, measured data not having to be determined as being abnormal) is determined as not being abnormal influenced by seasonal disturbance such as a temperature, a seawater temperature, or marine weather due to weighting using measured data in the second past predetermined period.

The evaluation unit 15 evaluates a condition of an aspect by using the allowable range of each monitoring item set by the calculation unit 14. Specifically, the evaluation unit 15 compares the current measured data of a monitoring item with a corresponding allowable range of the measured data, and notifies a worker of detection of a sign of abnormality in a case where the current measured data is not included in the allowable range.

The condition diagnosing device 1 includes, for example, a central processing unit (CPU), a random access memory (RAM), a read only memory (ROM), and a computer readable storage medium. A series of processes for realizing various functions is stored on a storage medium or the like in the form of a program, and the CPU reads the program to the RAM or the like and executes processing and calculation of information such that the various functions are realized. The program may employ a form of being installed in the ROM or other storage media in advance, a form of being provided in a condition of being stored in a computer readable storage medium, or a form of being delivered via wired or wireless communication means. The computer readable storage medium is, for example, a magnetic disk, a magnetooptical disc, a CD-ROM, a DVD-ROM, or a semiconductor memory.

Next, with reference to Fig. 2, a description will be made of an operation of the condition diagnosing device 1 according to the present embodiment, having the configuration. First, measured data detected by various sensors attached to a diagnosis target apparatus, here, a main engine or the periphery of the main engine is collected by the measured data collecting unit 12 (step SA1 in Fig. 2). Each piece of measured data collected as mentioned above is stored in the measured data collecting unit 12 for each monitoring item in correlation with time information at which the measured data is measured.

Next, the calculation unit 14 calculates a standard value that is an average value, a standard deviation, and a weighting coefficient of the measured data for each monitoring item, and a sets an allowable range for each monitoring item by using the values (step SA2 in Fig. 2). Consequently, the allowable range is set for each monitoring item.

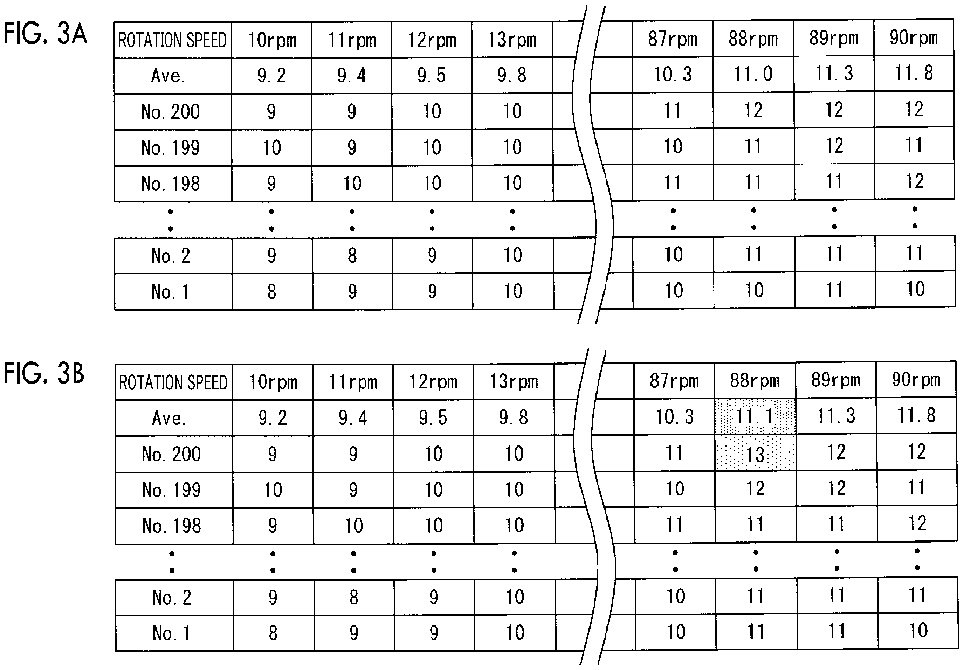

Figs. 3A and 3B illustrate examples of a matrix of a turbine vibration value for a main shaft rotation speed. In Figs. 3A and 3B, a horizontal first row indicates a main shaft rotation speed, a horizontal second row indicates an average value of turbine vibration values at each rotation speed, and horizontal third and subsequent rows indicate measured data of a turbine vibration values at each rotation speed. The main shaft rotation speed is set in the unit of 1 rpm from 10 rpm to 90 rpm. As the turbine vibration value, 200 items from acquisition numbers No. 1 to No. 200 are acquired for each rotation speed, measured data of No. 1 is oldest, and measured data of No. 200 is latest. In other words, the first past predetermined period in the present embodiment may be said to be a period in which the pieces of measured data of No. 1 to No. 200 are measured. An average value of the pieces of measured data of No. 1 to No. 200 is acquired at each rotation speed. As mentioned above, the pieces of measured data of the turbine vibration values of No. 1 to No. 200 for the main shaft rotation speed are pieces of evaluation target data for setting a standard value and an allowable range. Fig. 3A illustrates a condition in which all the pieces of measured data of the turbine vibration values of No. 1 to No. 200 are acquired, and then the average values are acquired. Here, in a case where measured data of a new turbine vibration value of 13 µm is acquired during an operation at a main shaft rotation speed of 88 rpm, as illustrated in Fig. 3B, the measured data of No. 1 is deleted (accumulated (reserved) in the measured data collecting unit 12) from the evaluation target data, and the pieces of data of No. 2 to No. 200 are respectively moved to the fields of No. 1 to No. 199. The latest data of 13 µm is input to No. 200, and an average value is updated to 11.1 µm by the pieces of data of No. 1 to No. 200.

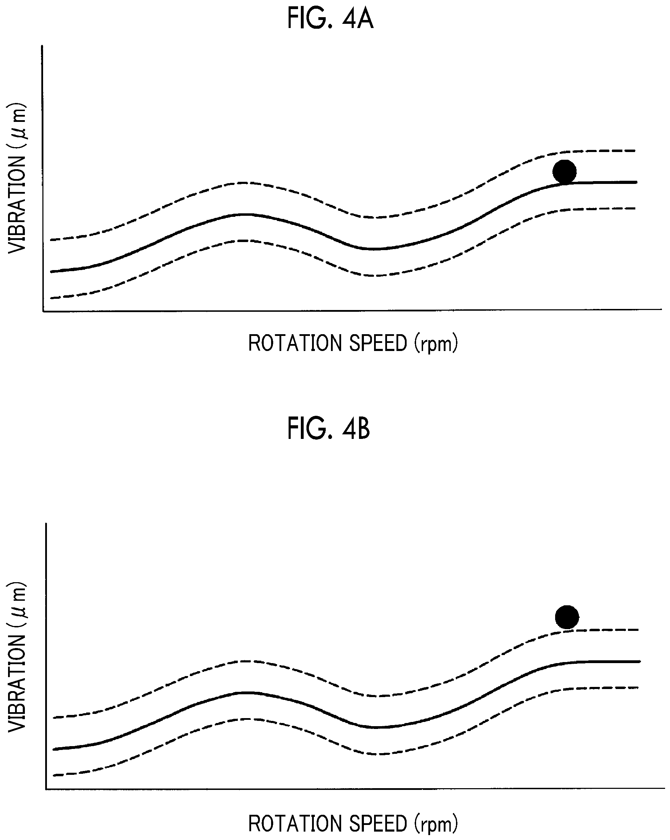

Figs. 4A and 4B illustrate examples of a standard value and an allowable range of a turbine vibration value for a main shaft rotation speed. In Figs. 4A and 4B, a transverse axis expresses a main shaft rotation speed (rpm), a longitudinal axis expresses a turbine vibration value (µm), a solid line indicates a standard value of the turbine vibration value, and a dotted line indicates an allowable range of the turbine vibration value. As illustrated in Figs. 3A and 3B, the standard values (average values) sequentially obtained are connected to each other to form a smooth curve, and thus to be continuously set as indicated by a solid line in Figs. 4A and 4B. Standard deviations are calculated by using the standard values, and allowable ranges indicated by the dotted line in Figs. 4A and 4B are set by using the standard deviations and weighting coefficients. The allowable ranges are also connected to each other to form a smooth curve and thus to be continuously set. The standard values and the standard deviations are sequentially updated on the basis of the latest measured data (evaluation target data) as illustrated in Figs. 3A and 3B, and the allowable ranges are also sequentially updated.

The evaluation unit 15 compares the current measured data of a monitoring item collected by the measured data collecting unit 12 with the allowable range set by the calculation unit 14, and thus evaluates a condition of an apparatus (step SA3 in Fig. 2). For example, in a case where the current measured data of the turbine vibration value for the main shaft rotation speed is indicated by a black circle in Fig. 4A, the evaluation unit 15 compares an allowable range corresponding to the main shaft rotation speed with the measured data of the turbine vibration value. In a case of Fig. 4A, the measured data is within the allowable range, and thus it is determined that there is no sign of abnormality. On the other hand, in a case where the current measured data of the turbine vibration value for the main shaft rotation speed is indicated by a black circle in Fig. 4B, the measured data is not included in the allowable range, and thus the evaluation unit 15 determines that there is a sign of abnormality, and sends a notification thereof. An alarm setting value and a trip setting value used for abnormality determination in the related art are set, and, in a case where measured data of a turbine vibration value exceeds the alarm setting value and the trip setting value, it is determined that abnormality actually occurs.

The processes in step SA1 to step SA3 are repeatedly executed such that an allowable range is normally updated by the calculation unit 14, and a condition of an apparatus is evaluated by the evaluation unit 15 on the basis of the updated allowable range.

A time interval of update of an allowable range in the calculation unit 14 and a time interval of condition evaluation in the evaluation unit 15 may or not be the same as each other. Generally, a rapid change in measured data of each monitoring item hardly occurs, and thus a time interval of update of an allowable range is preferably to be sufficiently longer than a time interval of condition evaluation. In the above-described way, update of an allowable range may not be frequently performed, and thus it is possible to reduce a processing load (for example, data corresponding to three years through sampling at an interval of 1 second or more and 30 seconds or less, preferably 30 seconds as initial setting is held). In a case where a time interval of update of an allowable range and a time interval of condition evaluation is the same as each other, the allowable range is updated simultaneously with measurement of measured data. In this case, an update time interval of an allowable range and an update time interval of each piece of data of condition evaluation are required to be separately set, and are thus easily managed (for example, data corresponding to three years through sampling at an interval of several seconds, preferably 1 second as initial setting is held).

As described above, according to the condition diagnosing device 1 of the present embodiment, the following advantageous effects are achieved. The condition diagnosing device 1 includes the measured data collecting unit 12 that sequentially collects and accumulates pieces of measured data for a plurality of monitoring items related to a diagnosis target apparatus; the calculation unit 14 that calculates an allowable range of each monitoring item on the basis of a standard value of each monitoring item calculated by using the measured data accumulated in the measured data collecting unit 12 and a standard deviation of the standard value, and updates the standard value and the allowable range at any time by using measured data accumulated in a first past predetermined period from the current time among pieces of measured data accumulated at any time in the measured data collecting unit 12; and the evaluation unit 15 that evaluates a condition of the apparatus by using the allowable range calculated by the calculation unit 14, a second past predetermined period is a period longer than the first past predetermined period, and the calculation unit 14 sets a predetermined weight by using measured data accumulated in the second past predetermined period from the current time with respect to the standard deviation of the standard value for each monitoring item, and calculates the allowable range of each monitoring item. Therefore, since a condition change for the diagnosis target apparatus can be recognized, and an abnormal condition of the apparatus can be monitored in the short, medium, or long term. Consequently, the occurrence of abnormality can be detected in the short term, and a qualitative secular change can be recognized in the medium or long term and can thus be used as a guide to medium or long-term maintenance and secular change prediction.

In the related art, there is a case where maintenance is required to be performed in regular inspection despite a normal condition, but, inspection is omitted for an apparatus in which measured data is determined as being within an allowable range, abnormality does not occur, and maintenance is not required, and thus it is possible to minimize cost for the maintenance.

A predetermined weight is set for a standard deviation of a standard value for each monitoring item by using measured data accumulated in the second past predetermined period from the current time, and thus an allowable range of each monitoring item is calculated. It is possible to handle measured data in which a discontinuous point is present by using the standard deviation. In addition, since weighting is performed on the basis of measured data in the second past predetermined period longer than the first past predetermined period, that is, measured data accumulated in a longer period, depending on different conditions in each monitoring item, the tendency of the measured data can be provided to an allowable range, and instantaneously occurring oscillation of measured data can also be excluded from the allowable range. It is possible to perform condition diagnosis conforming with an actual situation by finely setting an allowable range of each monitoring item.

The evaluation unit 15 compares the current measured data of a monitoring item with an allowable range of the monitoring item, determines that there is a sign of abnormality in a case where the measured data is not within the allowable range, and monitors a condition change of a diagnosis target apparatus by using the allowable range that dynamically changes in a time series. Thus, the evaluation unit can recognize interim process changing from a normal condition to an abnormal condition. Consequently, it is possible to detect a sign of abnormality, and thus to prevent in advance a defect by taking appropriate and accurate measures in a stage before abnormality occurs. An allowable range is set by using data actually acquired from a diagnosis target apparatus, and thus an appropriate range can be set in each apparatus.

The calculation unit 14 may change and set a weighting coefficient depending on the magnitude of the influence of disturbance, the weighting coefficient being calculated by using measured data accumulated in the second past predetermined period from the current time with respect to a standard deviation of a standard value for each monitoring item. Among monitoring items, there are items easily influenced by disturbance and items hardly influenced by disturbance. The disturbance is marine weather, a seawater temperature, or weather, and a steam plant other than a turbine may also be the disturbance.

Items easily influenced by disturbance such as marine weather, a seawater temperature, or weather may include a turbine vibration value and a speed reducing device vibration value for a main shaft rotation speed, and a condenser vacuum degree and a main engine torque for a main engine output. Items easily influenced by disturbance such as a steam plant other than a turbine may include a turbine internal steam pressure and a turbine internal steam temperature for a main engine output. In the items easily influenced by the disturbance, oscillation (variation) occurs in measured data due to the disturbance, and thus an allowable range may be set to be wide by setting a weighting coefficient for a standard deviation to be greater than in items hardly influenced by the disturbance. Consequently, it is possible to suppress measured data from exceeding an allowable range due to disturbance instead of abnormality as much as possible, and thus oscillation caused by the disturbance can be accurately determined by the evaluation unit 15 instead of not being determined as being the occurrence of abnormality.

On the other hand, among the monitoring items, items hardly influenced by disturbance may include a turbine bearing oil discharge temperature, a turbine bearing pad temperature, a speed reducing device bearing oil discharge temperature, and a LO pressure for a main shaft rotation speed, and a turbine shaft position, a main thrust shaft position, and a nozzle valve lift for a main engine output. In the items hardly influenced by disturbance, oscillation in measured data scarcely occurs even though disturbance occurs, and thus an allowable range may be set to be narrow by setting a small weighting coefficient for a standard deviation. For example, in a case where a change in a value of measured data is required to be evaluated in detail, such as a case where the influence of disturbance is hardly received, and abnormality is required to be determined even though deviation from a standard value is small, a weighting coefficient may be set to be small. Consequently, accurate determination can be performed by the evaluation unit 15. In a case where weighting is omitted, an unnecessary calculation process can be omitted.

The evaluation unit 15 may determine a sign of abnormality on the basis of a change in a standard value or an allowable range updated at any time by the calculation unit 14 instead of or in addition to the evaluation method described in the embodiment. For example, standard values updated at any time by the calculation unit 14 may be compared with each other in a time series, and a sign of abnormality may be detected in a case where the tendency of standard values set hitherto and the tendency of a standard value set this time are considerably different from each other.

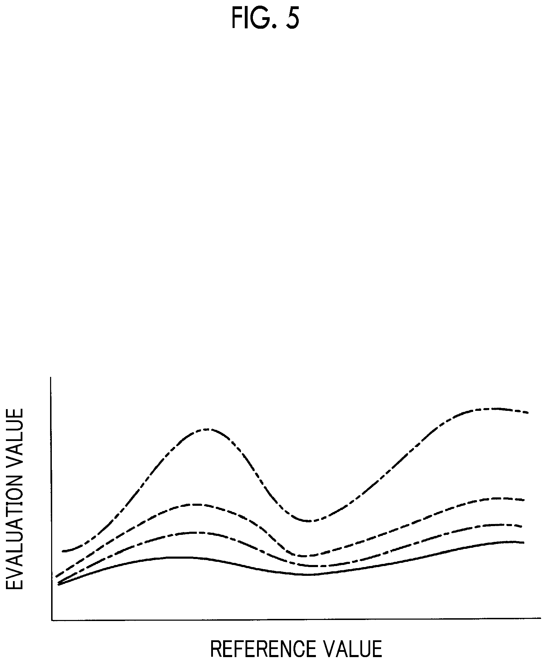

Fig. 5 is a graph illustrating a monitoring example for a standard value based on a secular change. In Fig. 5, a transverse axis expresses a reference value that is a monitoring item, and a longitudinal axis expresses an evaluation value, a solid line indicates a standard value right after an operation is started (for example, a time point at which six months elapses from starting of the operation), a dot chain line indicates a standard value at a time point at which three years elapses from starting of the operation, a dotted line indicates a standard value at a time point at which five years elapses from starting of the operation, and a two-dot chain line indicates a standard value at a time point at which seven years elapses from starting of the operation. Here, the term "starting of the operation" indicates that an operation of an apparatus is initially started.

As illustrated in Fig. 5, neither of a change from a standard value of an evaluation value for a reference value based on measured data right after the operation is started to a standard value at the time point at which three years elapses from starting of the operation and a change from the standard value at the time point at which three years elapses from starting of the operation to a standard value at the time point at which five years elapses from starting of the operation are great, and it is considered that secular deterioration linearly progresses. However, a change from the standard value at the time point at which five years elapses from starting of the operation to a standard value at the time point at which seven years elapses from starting of the operation is greater than hitherto, and thus it is expected that the influence of deterioration rapidly progresses.

As mentioned above, since a time-series evaluation is added to a standard value, it is possible to predict a secular change and deterioration in an apparatus, and thus to provide appropriate maintenance guides such as execution of detail inspection or recommendation on component replacement in the next regular inspection before the apparatus is damaged.

As mentioned above, the embodiments of the present invention have been described in detail, but a specific configuration is not limited to this embodiment. For example, in the above-described respective embodiments, a description has been made of an example in which the evaluation unit 15 determines that there is a sign of abnormality, and notifies a worker thereof in this case, but a separate notification unit such as a display, a speaker, or message transmission embodiment may be provided. Consequently, since the notification unit performing a notification in a case where the current measured data of a monitoring item is not within an allowable range, a notification of a sign of abnormality can be clearly performed, maintenance for an apparatus of which the notification of abnormality is performed can be quickly prompted, and thus it is possible to take necessary measures before a failure or damage occurs.

In the embodiments, a description has been made of a case where the condition diagnosing device of the present invention is applied to a marine main engine turbine, but the condition diagnosing device of the present invention is not limited to the marine main engine turbine, and may be widely applied to power generation steam turbines mounted on ships, power generation steam turbines mounted on marine floating systems (a floating production, storage and off-loading system (FPSO), a floating storage unit (FSU), and a floating storage and regasification unit (FSRU)), and apparatuses of which conditions can be generally monitored, and are effectively used to predict residual service lives thereof or to extract the occurrence of abnormality in advance.

### Reference Signs List

- 1: CONDITION DIAGNOSING DEVICE
- 12: MEASURED DATA COLLECTING UNIT
- 14: CALCULATION UNIT
- 15: EVALUATION UNIT

## Claims

1. A condition diagnosing device (1) comprising:
a measured data collecting unit (12) that sequentially collects and accumulates pieces of measured data for a plurality of monitoring items related to a diagnosis target apparatus;
a calculation unit (14) that updates a standard value of each monitoring item and a standard deviation of the standard value at any time by using the measured data accumulated in a first past predetermined period from the current time among the pieces of measured data accumulated at any time in the measured data collecting unit (12);
wherein the calculation unit (14) sets a predetermined weight depending on a magnitude of the influence of disturbance, with respect to said standard deviation of said standard value for each monitoring item,
wherein said calculation unit (14) updates said predetermined weight at any time by using measured data accumulated in a second past predetermined period from the current time among the pieces of measured data accumulated at any time in said measured data collecting unit (12), wherein said second past predetermined period is a period longer than said first past predetermined period,
wherein said calculation unit (14) calculates and updates an allowable range of each monitoring item at any time on the basis of said standard value of each monitoring item, said standard deviation of the standard value, and said predetermined weight set for the standard deviation,
and an evaluation unit (15) that evaluates a condition of the apparatus by using the allowable range calculated by the calculation unit (14).

2. The condition diagnosing device according to claim 1,
wherein the evaluation unit compares the current measured data of the monitoring item with the allowable range of the monitoring item, and determines that there is a sign of abnormality in a case where the measured data is not within the allowable range.

3. The condition diagnosing device according to claim 2, further comprising:
a notification unit that performs a notification in a case where the current measured data of the monitoring item is not within the allowable range.

4. A condition diagnosing method comprising:
a measured data collecting step (SA1) of sequentially collecting and accumulating pieces of measured data for a plurality of monitoring items related to a diagnosis target apparatus;
a calculation step of updating a standard value of each monitoring item and a standard deviation of the standard value at any time by using the measured data accumulated in a first past predetermined period from the current time among the pieces of measured data accumulated at any time in the measured data collecting step (SA1);
wherein the calculation step comprises setting a predetermined weight depending on a magnitude of the influence of disturbance, with respect to said standard deviation of said standard value for each monitoring item,
wherein, in the calculation step,
said predetermined weight is updated at any time by using measured data accumulated in a second past predetermined period from the current time among the pieces of measured data accumulated at any time in the measured data collecting step (SA1),
wherein said second past predetermined period is a period longer than said first past predetermined period,
wherein in the calculation step an allowable range of each monitoring item is calculated and updated (SA2) at any time on the basis of said standard value of each monitoring item, said standard deviation of the standard value, and said predetermined weight set for the standard deviation, and
wherein, in an evaluation step, a condition of the apparatus is evaluated (SA3) by using the allowable range calculated in the calculation step.

5. A condition diagnosing program comprising:
a measured data collecting step (SA1) of sequentially collecting and accumulating pieces of measured data for a plurality of monitoring items related to a diagnosis target apparatus;
a calculation step of updating a standard value of each monitoring item and a standard deviation of the standard value at any time by using the measured data accumulated in a first past predetermined period from the current time among the pieces of measured data accumulated at any time in the measured data collecting step;
wherein the calculation step comprises setting a predetermined weight depending on a magnitude of the influence of disturbance, with respect to said standard deviation of said standard value for each monitoring item,
wherein, in the calculation step,
said predetermined weight is updated at any time by using measured data accumulated in a second past predetermined period from the current time among the pieces of measured data accumulated at any time in the measured data collecting step,
wherein said second past predetermined period is a period longer than said first past predetermined period,
wherein in the calculation step an allowable range of each monitoring item is calculated and updated (SA2) at any time on the basis of said standard value of each monitoring item, said standard deviation of the standard value, and said predetermined weight set for the standard deviation, and
wherein, in an evaluation step, a condition of the apparatus is evaluated (SA3) by using the allowable range calculated in the calculation step.

6. The condition diagnosing device (1) according any one of claims 1 to 3,
wherein the measured data accumulated in the second past predetermined period from the current time includes an influence of seasonal disturbance, and
wherein the apparatus is mounted on a ship or a marine floating system.

## Patentansprüche

1. Zustandsdiagnosevorrichtung (1), umfassend:
eine Sammeleinheit (12) gemessener Daten, die sequentiell Stücke gemessener Daten für eine Vielzahl von Überwachungselementen in Bezug auf eine Diagnosezieleinrichtung sammelt und akkumuliert;
eine Berechnungseinheit (14), die einen Standardwert für jedes Überwachungselement und eine Standardabweichung des Standardwerts zu jeglichem Zeitpunkt durch Verwenden der gemessenen Daten aktualisiert, die in einem ersten von dem aktuellen Zeitpunkt vergangenen vorher festgelegten Zeitraum unter den Stücken gemessener Daten akkumuliert wurden, die zu jeglichem Zeitpunkt in der Sammeleinheit (12) gemessener Daten akkumuliert wurden;
wobei die Berechnungseinheit (14) abhängig von einer Größenordnung des Einflusses von Störung bezüglich der Standardabweichung des Standardwerts für jedes Überwachungselement eine vorher festgelegte Gewichtung einstellt,
wobei die Berechnungseinheit (14) die vorher festgelegte Gewichtung zu jeglichem Zeitpunkt durch Verwenden gemessener Daten aktualisiert, die in einem zweiten von dem aktuellen Zeitpunkt vergangenen vorher festgelegten Zeitraum unter den Stücken gemessener Daten akkumuliert wurden, die zu jeglichem Zeitpunkt in der Sammeleinheit (12) gemessener Daten akkumuliert wurden, wobei der zweite vergangene vorher festgelegte Zeitraum ein Zeitraum ist, der länger als der erste vorher festgelegte Zeitraum ist,
wobei die Berechnungseinheit (14) einen zulässigen Bereich jedes Überwachungselementes zu jeglichem Zeitpunkt auf der Basis des Standardwerts von jedem Überwachungselement, der Standardabweichung des Standardwerts und der vorher festgelegten Gewichtung, die für die Standardabweichung eingestellt ist, berechnet und aktualisiert,
und eine Bewertungseinheit (15), die einen Zustand der Einrichtung durch Verwenden des durch die Berechnungseinheit (14) berechneten zulässigen Bereichs bewertet.

2. Zustandsdiagnosevorrichtung nach Anspruch 1,
wobei die Bewertungseinheit die aktuell gemessenen Daten des Überwachungselements mit dem zulässigen Bereich des Überwachungselements vergleicht, und bestimmt, dass es in einem Fall, in dem die gemessenen Daten nicht innerhalb des zulässigen Bereichs liegen, ein Zeichen von Anomalität gibt.

3. Zustandsdiagnosevorrichtung nach Anspruch 2, weiter umfassend:
eine Benachrichtigungseinheit, die eine Benachrichtigung in einem Fall durchführt, in dem die aktuell gemessenen Daten des Überwachungselements nicht innerhalb des zulässigen Bereichs liegen.

4. Zustandsdiagnoseverfahren, umfassend:
einen Sammelschritt (SA1) gemessener Daten des sequentiellen Sammelns und Akkumulierens von Stücken gemessener Daten für eine Vielzahl von Überwachungselementen in Bezug auf eine Diagnosezieleinrichtung;
einen Berechnungsschritt des Aktualisierens eines Standardwerts für jedes Überwachungselement und einer Standardabweichung des Standardwerts zu jeglichem Zeitpunkt durch Verwenden der gemessenen Daten, die in einem ersten von dem aktuellen Zeitpunkt vergangenen vorher festgelegten Zeitraum unter den Stücken gemessener Daten akkumuliert wurden, die zu jeglichem Zeitpunkt in dem Sammelschritt (SA1) gemessener Daten akkumuliert wurden;
wobei der Berechnungsschritt Einstellen einer vorher festgelegten Gewichtung abhängig von einer Größenordnung des Einflusses von Störung bezüglich der Standardabweichung des Standardwerts für jedes Überwachungselement umfasst,
wobei, in dem Berechnungsschritt,
die vorher festgelegte Gewichtung zu jeglichem Zeitpunkt durch Verwenden gemessener Daten aktualisiert wird, die in einem zweiten von dem aktuellen Zeitpunkt vergangenen Zeitraum unter den Stücken gemessener Daten akkumuliert wurden, die zu jeglichem Zeitpunkt in dem Sammelschritt (SA1) gemessener Daten akkumuliert wurden,
wobei der zweite vergangene vorher festgelegte Zeitraum ein Zeitraum ist, der länger ist als der erste vergangene vorher festgelegte Zeitraum,
wobei in dem Berechnungsschritt ein zulässiger Bereich von jedem Überwachungselement zu jeglichem Zeitpunkt auf der Basis des Standardwerts von jedem Überwachungselement, der Standardabweichung des Standardwerts und der vorher festgelegten Gewichtung, die für die Standardabweichung eingestellt ist, berechnet und aktualisiert (SA2) wird, und
wobei in einem Bewertungsschritt ein Zustand der Einrichtung durch Verwenden des zulässigen Bereichs, der in dem Berechnungsschritt berechnet wird, bewertet (SA3) wird.

5. Zustandsdiagnoseprogramm, umfassend:
einen Sammelschritt (SA1) gemessener Daten des sequentiellen Sammelns und Akkumulierens von Stücken gemessener Daten für eine Vielzahl von Überwachungselementen in Bezug auf eine Diagnosezieleinrichtung;
einen Berechnungsschritt des Aktualisierens eines Standardwerts für jedes Überwachungselement und einer Standardabweichung des Standardwerts zu jeglichem Zeitpunkt durch Verwenden der gemessenen Daten, die in einem ersten von dem aktuellen Zeitpunkt vergangenen vorher festgelegten Zeitraum unter den Stücken gemessener Daten akkumuliert wurden, die zu jeglichem Zeitpunkt in dem Sammelschritt gemessener Daten akkumuliert wurden;
wobei der Berechnungsschritt Einstellen einer vorher festgelegten Gewichtung abhängig von einer Größenordnung des Einflusses von Störung bezüglich der Standardabweichung des Standardwerts für jedes Überwachungselement umfasst,
wobei, in dem Berechnungsschritt,
die vorher festgelegte Gewichtung zu jeglichem Zeitpunkt durch Verwenden gemessener Daten aktualisiert wird, die in einem zweiten von dem aktuellen Zeitpunkt vergangenen Zeitraum unter den Stücken gemessener Daten akkumuliert wurden, die zu jeglichem Zeitpunkt in dem Sammelschritt gemessener Daten akkumuliert wurden,
wobei der zweite vergangene vorher festgelegte Zeitraum ein Zeitraum ist, der länger ist als der erste vergangene vorher festgelegte Zeitraum,
wobei in dem Berechnungsschritt ein zulässiger Bereich von jedem Überwachungselement zu jeglichem Zeitpunkt auf der Basis des Standardwerts von jedem Überwachungselement, der Standardabweichung des Standardwerts und der vorher festgelegten Gewichtung, die für die Standardabweichung eingestellt ist, berechnet und aktualisiert (SA2) wird, und
wobei in einem Bewertungsschritt ein Zustand der Einrichtung durch Verwenden des zulässigen Bereichs, der in dem Berechnungsschritt berechnet wird, bewertet (SA3) wird.

6. Zustandsdiagnosevorrichtung (1) nach einem der Ansprüche 1 bis 3,
wobei die gemessenen Daten, die in dem zweiten von dem aktuellen Zeitpunkt vergangenen vorher festgelegten Zeitraum akkumuliert wurden, einen Einfluss jahreszeitlich bedingter Störung beinhalten, und
wobei die Einrichtung an einem Schiff oder einem marinen Schwimmsystem montiert ist.

## Revendications

1. Dispositif de diagnostic d'état (1) comprenant :
une unité de collecte de données de mesure (12) qui collecte et accumule successivement des morceaux de données de mesure pour une pluralité d'éléments de surveillance liés à un appareil cible de diagnostic ;
une unité de calcul (14) qui met à jour une valeur standard de chaque élément de surveillance et un écart type de la valeur standard à tout moment en utilisant les données de mesure accumulées dans une première période prédéterminée passée à partir du moment présent parmi les morceaux de données de mesure accumulées à tout moment dans l'unité de collecte de données de mesure (12) ;
dans lequel l'unité de calcul (14) établit une pondération prédéterminée en fonction d'une ampleur de l'influence de la perturbation, par rapport audit écart type de ladite valeur standard pour chaque élément de surveillance,
dans lequel ladite unité de calcul (14) met à jour ladite pondération prédéterminée à tout moment en utilisant des données de mesure accumulées dans une seconde période prédéterminée passée à partir du moment présent parmi les morceaux de données de mesure accumulées à tout moment dans ladite unité de collecte de données de mesure (12), dans lequel ladite seconde période prédéterminée passée est une période plus longue que ladite première période prédéterminée passée,
dans lequel ladite unité de calcul (14) calcule et met à jour une plage autorisée de chaque élément de surveillance à tout moment sur la base de ladite valeur standard de chaque élément de surveillance, dudit écart type de la valeur standard, et de ladite pondération prédéterminée établie pour l'écart type,
et une unité d'évaluation (15) qui évalue un état de l'appareil en utilisant la plage autorisée calculée par l'unité de calcul (14).

2. Dispositif de diagnostic d'état selon la revendication 1,
dans lequel l'unité d'évaluation compare les données de mesure actuelles de l'élément de surveillance avec la plage autorisée de l'élément de surveillance, et détermine qu'il y a un signe d'anormalité dans un cas où les données de mesure ne sont pas dans la plage autorisée.

3. Dispositif de diagnostic d'état selon la revendication 2, comprenant en outre :
une unité de notification qui effectue une notification dans un cas où les données de mesure actuelles de l'élément de surveillance ne sont pas dans la plage autorisée.

4. Procédé de diagnostic d'état comprenant :
une étape de collecte de données de mesure (SA1) qui collecte et accumule successivement des morceaux de données de mesure pour une pluralité d'éléments de surveillance liés à un appareil cible de diagnostic ;
une étape de calcul mettant à jour une valeur standard de chaque élément de surveillance et un écart type de la valeur standard à tout moment en utilisant les données de mesure accumulées dans une première période prédéterminée passée à partir du moment présent parmi les morceaux de données de mesure accumulées à tout moment dans l'étape de collecte de données de mesure (SA1) ;
dans lequel l'étape de calcul comprend l'établissement d'une pondération prédéterminée en fonction d'une ampleur de l'influence de la perturbation, par rapport audit écart type de ladite valeur standard pour chaque élément de surveillance,
dans lequel, dans l'étape de calcul,
ladite pondération prédéterminée est mise à jour à tout moment en utilisant des données de mesure accumulées dans une seconde période prédéterminée passée à partir du moment présent parmi les morcaux de données de mesure accumulées à tout moment dans l'étape de collecte de données de mesure (SA1),
dans lequel ladite seconde période prédéterminée passée est une période plus longue que ladite première période prédéterminée passée,
dans lequel dans l'étape de calcul, une plage autorisée pour chaque élément de surveillance est calculée et mise à jour (SA2) à tout moment sur la base de ladite valeur standard de chaque élément de surveillance, dudit écart type de la valeur standard, et de ladite pondération prédéterminée établie pour l'écart type, et
dans lequel, dans l'étape d'évaluation, un état de l'appareil est évalué (SA3) en utilisant la plage autorisée dans l'étape de calcul.

5. Programme de diagnostic d'état comprenant :
une étape de collecte de données de mesure (SA1) qui collecte et accumule successivement des morceaux de données de mesure pour une pluralité d'éléments de surveillance liés à un appareil cible de diagnostic ;
une étape de calcul mettant à jour une valeur standard de chaque élément de surveillance et un écart type de la valeur standard à tout moment en utilisant les données de mesure accumulées dans une première période prédéterminée passée à partir du moment présent parmi les morceaux de données de mesure accumulées à tout moment dans l'étape de collecte de données de mesure ;
dans lequel l'étape de calcul comprend l'établissement d'une pondération prédéterminée en fonction d'une ampleur de l'influence de la perturbation, par rapport audit écart type de ladite valeur standard pour chaque élément de surveillance,
dans lequel, dans l'étape de calcul,
ladite pondération prédéterminée est mise à jour à tout moment en utilisant des données de mesure accumulées dans une seconde période prédéterminée passée à partir du moment présent parmi les morceaux de données de mesure accumulées à tout moment dans l'étape de collecte de données de mesure,
dans lequel ladite seconde période prédéterminée passée est une période plus longue que ladite première période prédéterminée passée,
dans lequel dans l'étape de calcul, une plage autorisée pour chaque élément de surveillance est calculée et mise à jour (SA2) à tout moment sur la base de ladite valeur standard de chaque élément de surveillance, dudit écart type de la valeur standard, et de ladite pondération prédéterminée établie pour l'écart type, et
dans lequel, dans l'étape d'évaluation, un état de l'appareil est évalué (SA3) en utilisant la plage autorisée dans l'étape de calcul.

6. Dispositif de diagnostic d'état (1) selon l'une quelconque des revendications 1 à 3,
dans lequel les données de mesure accumulées dans la seconde période prédéterminée passée à partir du moment présent incluent une influence de perturbation saisonnière, et
dans lequel l'appareil est monté sur un bateau ou un système flottant marin.
